# EUROPÄISCHE PATENTSCHRIFT

(11) **EP 1 099 372 B1**
(45) Veröffentlichungstag und Bekanntmachung des Hinweises auf die Patenterteilung: **05.03.2003**
(21) Anmeldenummer: 00123023.4
(22) Anmeldetag: 24.10.2000
(51) Int. Cl.: A01K 5/02

(54) **Verfahren zur Abgabe von Futter**
Method of distributing animal feed
Möthode pour la distribution de la nourriture des animaux

(30) Priorität: 13.11.1999 DE 19954640
(43) Veröffentlichungstag der Anmeldung: 16.05.2001
(73) Patentinhaber: HoWema Gerätebau GmbH & Co. KG, 49429 Visbek (DE)
(72) Erfinder: Garberding, Ralf, 27578 Bremerhaven (DE)
(74) Vertreter: Jabbusch, Matthias

(56) Entgegenhaltungen:
- EP-A- 0 126 240
- EP-A- 0 519 114
- EP-A- 0 544 640

## Beschreibung

Die Erfindung betrifft ein Verfahren zur Abgabe von Futter über wenigstens eine Abgabestelle wenigstens einer mit mehreren derartigen Abgabestellen ausgerüsteten Stichleitung, die hinter ihrer letzten Abgabestelle unter Ausbildung eines definierten Endpunktes für eine Flüssigkeitsleitung sperrbar ist, wobei Futter am Anfang der Stichleitung eingeleitet wird und durch Öffnen einer ausgewählten Abgabestelle abgegeben wird, wonach die Stichleitung von dem Endpunkt aus mittels eines gasförmigen Rückschiebemediums, vorzugsweise mittels Druckluft, wieder entleert wird.

Ein solches gattungsgemäßes Verfahren ist prinzipiell aus der EP 0 544 640 A entnehmbar.

Diese Druckschrift offenbart eine Anlage zur dosierten Abgabe von Flüssigfutter und umfaßt dazu im wesentlichen einen Futter-Anmischbehälter, eine Stichleitung, in die das Futter aus dem Anmischbehälter einleitbar ist und einen Druckluftkompressor, mit dem das Futter aus der Stichleitung wieder in Richtung auf den Anmischbehälter oder einen sonstigen Aufnahmebehälter rückschiebbar ist.

Die gezeigte Stichleitung verfügt über mehrere Abgabestellen. Hierbei handelt es sich um ansteuerbare Futterventile, so daß bei einem Füttervorgang ein Futter einer bestimmten Zusammensetzung im Fütter-Anmischbehälter gemischt werden kann und über die Stichleitung und jeweils für diesen bestimmten Füttervorgang ausgewählte Abgabestellen abgefüttert werden kann. Es kann also beispielsweise eine bestimmte Futtermischung in einem ersten Füttervorgang über Abgabestellen Nr. 2 und 5 abgegeben werden, während beispielsweise in einem zweiten Füttervorgang ein anderes Futter nur über Abgabestelle Nr. 3 abgegeben wird usw. Nach jedem Füttervorgang wird das in der Stichleitung verbliebene Restfutter mit Hilfe von Druckluft sauber und restlos rückwärts wieder ausgeschoben, so daß die Stichleitung für die nächste Futterzusammensetzung frei wird. Eventuell kann das Restfutter in den Anmischbehälter zurückgeschoben werden, um für eine neue Futteranmischung für einen weiteren Füttervorgang noch genutzt zu werden, oder es wird in einem Lagerungsbehälter ausgelagert.

Dieser bekannten Anlage lag letztendlich die Überlegung zugrunde, derartige gesteuerte Füttervorgänge möglichst einfach zu gestalten, und zwar einfach im Hinblick auf den Aufbau der Anlage und insbesondere im Hinblick auf die Steuerung der Anlage. Dabei kann die Anlage übrigens durch weitere Stichleitungen mit weiteren Abgabestellen ohne weiteres vergrößert werden.

Eine andere Vorgehensweise für eine möglichst gezielte und restlose Verfütterung von Futter bestimmter Zusammensetzungen über gezielt ausgewählte Abgabestellen sieht anstelle einer Stichleitung eine Ringleitung vor, durch die ein Futterstrang gegebenenfalls vorwärts oder rückwärts und mit Hilfe eines futterneutralen Schiebemediums, wie Wasser, geschoben werden kann, und zwar jeweils in dem Bereich der jeweils auszuwählenden Abgabestelle. Ein Verfahren und eine Vorrichtung gemäß diesem Prinzip ist aus der EP 0 126 240 B entnehmbar.

Dieses letztgenannte Prinzip aus dem Stand der Technik ist für eine gezielte und auch restlose Verfütterung von Futtermischungssträngen sehr durchdacht und zuverlässig, jedoch setzt die zugehörige Anlage einen relativ hohen Steuerungsaufwand voraus. Eine solche Anlage beinhaltet also einen relativ großen Softwareanteil, so daß möglicherweise der eine oder andere Benutzer mit dem zugehörigen Steuerungsaufwand überfordert ist oder jedenfalls der jeweilige landwirtschaftliche Betrieb eine solche relativ aufwendigere und komplexere Anlage nicht benötigt.

Der vorliegenden Erfindung liegt daher die Aufgabe zugrunde, ein Verfahren der eingangs genannten Gattung so weiterzuentwickeln, daß die prinzipielle Einfachheit der zugehörigen Anlage in Aufbau und Steuerung beibehalten werden kann, jedoch wie bei der alternativen Verwendung einer Ringleitung, dennoch eine besser gesteuerte und, aus hygienischen und ökonomischen Gründen, auch restlosere Verfütterung des jeweils zubereiteten Futters möglich ist.

Diese Aufgabe wird erfindungsgemäß dadurch gelöst, daß für einen Füttervorgang vor der Einleitung des Futters am Anfang der Stichleitung zunächst ein Füllmedium in die Stichleitung eingeleitet wird, und zwar in solcher Menge, daß es unter Füllung des jeweiligen Endabschnittes der Stichleitung vom Endpunkt bis zu der letzten Abgabestelle der Stichleitung zurückreichen wird, durch die als (eine) ausgewählte Abgabestelle Futter abgegeben werden soll, wenn der aus Futter gebildete Futterstrang an dieser Abgabestelle zur Abfütterung ansteht.

Bei dem bekannten Verfahren gemäß der EP 0 544 640 A besteht das Problem, daß die gesamte Stichleitung bis zu ihrem Endpunkt von einem Futter-Anmischbehälter aus mit einer bestimmten Futtermischung gefüllt wird. Der Endpunkt der Stichleitung ist Endpunkt für jede Flüssigkeit, während in umgekehrter Richtung das Rückschiebemedium, also beispielsweise Druckluft, durch diesen Endpunkt hindurch auf die in der Stichleitung anstehende Flüssigkeit einwirken kann. Bei der bekannten Anlage wird der Endpunkt der Stichleitung durch ein ein weiteres Vordringen des Futters verhinderndes Entlüftungsventil gebildet.

Ganz offensichtlich ist mit einem solchen Konzept eine insbesondere restlose Verfütterung des jeweiligen Futtermittels nicht beabsichtigt, sondern es soll der nach jedem Füttervorgang auf jeden Fall verbleibende Futterrest mit der Druckluft zurückgedrückt werden, und zwar über einen Zwischenbehälter, der mithilft, eine jeweils reine, vorbestimmte Futtermischung für den jeweiligen Füttervorgang zu erstellen, wobei vorher verbliebenes Restfutter entweder verwendet wird oder nicht.

Vorteil des bekannten Verfahrens ist es aber, daß nach jedem Füttervorgang mit Hilfe der Druckluft die gesamte Stichleitung von Rückständen freigemacht wird, also gesäubert wird, was hygienische Vorteile hat und auch der Vorteil hat, daß eine leere Stichleitung zwischen den Füttervorgängen beispielsweise im Winter nicht einfrieren kann.

Diese Vorteile verbindet die erfindungsgemäße Lösung mit weiteren Vorteilen unter Vermeidung der geschilderten Nachteile.

Beim erfindungsgemäßen Vorgehen wird nämlich zunächst einmal nicht sofort Futter in die Stichleitung eingegeben, sondern es wird erst einmal eine gewisse Menge eines Füllmediums, vorzugsweise Wasser, in die Stichleitung eingeleitet, und zwar gerade soviel, daß der sich bei dem jeweiligen Füttervorgang ausbildende Endabschnitt oder auch Totraum zwischen der letzten für diesen Füttervorgang ausgewählten Abgabestelle und dem Endpunkt der Stichleitung automatisch ergibt. Die letzte ausgewählte Abgabestelle ist diejenige Abgabestelle, die überhaupt bei diesem speziellen Füttervorgang geöffnet werden soll und die am weitesten entfernt ist von der Einleitungsseite der Stichleitung bzw. am dichtesten zu dem Endpunkt der Stichleitung gelegen ist. Es handelt sich dabei also nicht immer unbedingt um die letzte Abgabestelle überhaupt, da ja vielleicht für einen bestimmten Füttervorgang mehrere der dem Endpunkt der Stichleitung am nächsten gelegenen Abgabestellen überhaupt nicht geöffnet werden sollen und für diesen Füttervorgang somit nicht als ausgewählte Abgabestellen anzusehen sind. Dies bedeutet, daß auch für jeden Füttervorgang ein anderes Füllvolumen notwendig ist, das vorberechnet werden muß und dementsprechend das Füllmedium vor dem jeweiligen Füttervorgang eingeleitet wird.

Durch Füllung dieses Totraumes der Stichleitung mit einem Füllmedium, vorzugsweise Wasser, wird ein erheblicher Futterrest in der Stichleitung bereits vermieden. Der Futterstrang selbst steht nur bis zu der Abgabestelle an, durch die er abgegeben werden soll, während das Füllmedium den Futterstrang in Richtung auf den Endpunkt der Stichleitung blockiert.

Nach einer Weiterbildung des erfindungsgemäßen Verfahrens wird auch nur soviel Futter in die Stichleitung eingegeben, wie in einem Füttervorgang abgegeben werden soll. Dazu wird das Futter vorzugsweise einleitungsseitig mit einem Schiebemedium nachgedrückt, wozu ebenfalls Wasser verwendet werden kann.

Nach dem Füttervorgang ist daher das Futter möglichst restlos verfüttert, so daß das Füllmedium Wasser und das Schiebemedium Wasser mit ihren Fronten aufeinandertreffen und somit also nach dem Füttervorgang die gesamte Stichleitung nur noch mit Wasser gefüllt ist. Dieses Wasser kann zum Ende des Füttervorganges oder vor Beginn des neuen Füttervorganges mit Hilfe des Rückschiebemediums, der Druckluft, aus der Stichleitung entfernt werden, wobei es offensichtlich sehr viel leichter ist, derartiges Wasser für das Anmischen einer neuen Futtermischung für einen nächsten Füttervorgang wiederzuverwenden, als übriggebliebene Futterreste.

Soll innerhalb eines Füttervorganges Futter nicht nur über eine Abgabestelle als ausgewählter Abgabestelle abgegeben werden, sondern über mehrere ausgewählte Abgabestellen, so erfolgt diese Abgabe nacheinander, und zwar beginnend an der ausgewählten Abgabestelle, die dem Anfangspunkt der Stichleitung am nächsten liegt. Ist die entsprechende Futtermenge abgegeben worden, so folgt als nächstes die nächste ausgewählte Abgabestelle in Richtung des Endpunktes. Alternativ könnte unter Nutzung des Rückschiebemediums auch eine Abfüllung in umgekehrter Reihenfolge in Betracht kommen.

In diesem Zusammenhang soll darauf hingewiesen werden, daß auch der Endpunkt der Stichleitung selbst variabel gestaltet werden könnte, indem beispielsweise eine entsprechende Füssigkeitssperrung jeweils möglichst dicht hinter der letzten ausgewählten Abgabestelle erfolgt, was beispielsweise dadurch möglich wäre, daß zwischen den Abgabestellen jeweils Sperrventile angeordnet sind, die dann aber auch einzeln angesteuert werden müßten. Es wird dabei jeweils Füllmedium bei der Einleitung gespart, wenn der Totraum entsprechend verkürzt wird, was den Vorteil hat, daß Füllmedium, insbesondere bei Verwendung von Wasser, in möglichst geringer Menge eingesetzt und auch wiederverwendet werden kann.

Eine nächste Weiterbildung der Erfindung sieht dazu vor, daß an der Front des Füllmediums ein Trennkörper bewegt wird, der als Flüssigleitungsverschluß am Endpunkt gestoppt wird. Dies kann beispielsweise mit Hilfe eines Anschlages, z. B. einer Anschlagschulter geschehen. Dies kann aber beispielsweise auch mit Sensoren geschehen, die somit auch die Position bzw. das Nahen des Trennkörpers erkennen und für eine Steuerung der Anlage signalisieren können.

Außerdem ist es sachdienlich, entsprechend auch einen definierten Anfangspunkt der Stichleitung vorzusehen, so daß also der Trennkörper nur auf einer Strecke zwischen einem Anfangspunkt und einem Endpunkt der Stichleitung bewegt werden kann, wobei auf dieser Strecke auch die jeweiligen Abgabestellen der Stichleitungen angeordnet sind.

Außerdem sei hinzugefügt, daß für das Zurückdrücken des Futters und/oder des Füllmediums kein besonderer Kompressor bereitgestellt werden muß, sondern derjenige Druckmittelkompressor ausreicht, der üblicherweise bei derartigen Anlagen ohnehin vorhanden ist, um über pneumatische Leitungen die Abgabeventile der Abgabestellen zu schalten, d. h. zu öffnen oder zu schließen. Die Leistung dieses Kompressors reicht ohne weiteres aus, auch den Rückschiebevorgang vorzunehmen.

Insbesondere bei Verwendung eines Trennkörpers ist dieses Rückschieben einfach möglich und führt insbesondere zu einer besonders sauberen Reinigung der gesamten Stichleitung.

Ein Auführungsbeispiel des erfindungsgemäßen Verfahrens und der dabei verwendbaren Vorrichtung, aus dem sich auch weitere erfinderische Merkmale ergeben, wird im Zusammenhang mit den Figuren näher erläutert. Es zeigen:
- Fig. 1:: eine schematische Darstellung einer Anlage zur Durchführung des erfindungsgemäßen Verfahrens und
- Fig. 2: bis 8:: Phasen des erfindungsgemäßen Verfahrens in bzw. anhand einer Anlage gemäß Fig. 1.

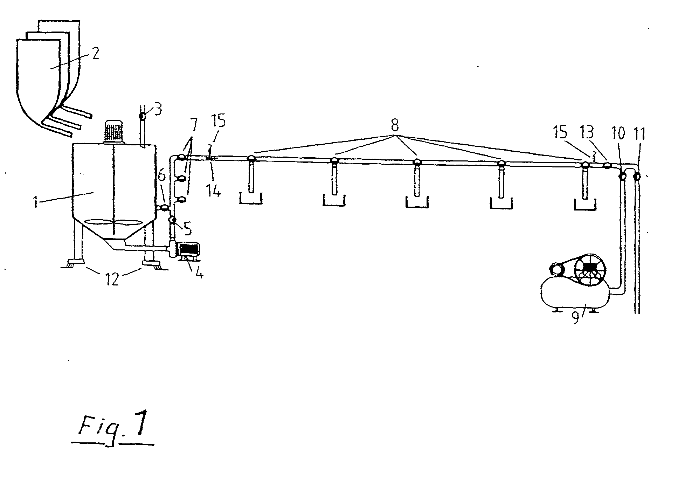

Fig. 1 zeigt schematisch eine Anlage für eine Restlosfütterung mit Hilfe einer Stichleitung zur Durchführung des erfindungsgemäßen Verfahrens.

Die Anlage umfaßt einen verwogenen Futter-Mischbehälter 1 mit einem geeigneten Wiegesystem 12. Das in dem Mischbehälter 1 anzumischende Futter für einen jeweiligen Füttervorgang und die jeweils zugeführten Komponenten können mit Hilfe des Wiegesystems also in ihrem Gewicht erfaßt werden und auf den Futterbedarf der mit dem Füttervorgang zu versorgenden Tiere abgestimmt werden.

Oberhalb des Mischbehälters 1 sind Vorratsbehälter 2 angedeutet, die mehrere verschiedene Futterkomponenten für eine im Mischbehälter 1 anzumischende Futtermischung beinhalten können. Diese können mit unterschiedlichen Anteilen in den Mischbehälter 1 eingegeben werden, um eine Futtermischung zu erstellen, die für einen jeweiligen Füttervorgang verwendet werden soll.

Des weiteren ist in der Zeichnung eine Zuleitung 3 zu erkennen, mit der eine flüssige Futterkomponente, z. B. Wasser, in den Mischbehälter 1 eingeleitet werden kann, um ein leitbares Flüssigfutter im Mischbehälter zu erstellen. Es können auch mehrere Zuführungen 3 für Flüssigkomponenten vorgesehen sein.

Mit Hilfe einer Pumpe 4 kann die im Mischbehälter 1 erstellte Futtermischung über ein Hauptventil 5 in eine Stichleitung eingeleitet werden, welche mit mehreren Abgabestellen, nämlich mit Ventilen 8 zum Ausdosieren an jeweiligen Futterstellen, ausgerüstet ist. Im Bereich der Abgabestellen sind schematisch Futtertröge für die jeweiligen Futterstellen angedeutet.

Aus der Stichleitung gegebenenfalls vorgenommene Rückführungen von Futter oder sonstigen Komponenten können über ein Ventil 6 gegebenenfalls in den Mischbehälter 1 zurückgeleitet werden. Es könnte aber alternativ auch eine Rückführung in einen Zusatzbehälter möglich sein, wobei ein solcher Zusatzbehälter und eine entsprechende Leitungsverbindung der Übersicht halber in der Fig. 1 nicht näher dargestellt sind.

In der Fig. 1 ist nur eine Stichleitung näher ausgeführt. Es können in einer solchen Anlage aber auch mehrere parallel geschaltete Stichleitungen vorgesehen sein. Diese Stichleitungen können an Anfangsventilen 7 beginnen und an Endventilen 13 enden. Im Hinblick auf die Möglichkeit, mehrere Stichleitungen anzuschließen, sind in der Fig. 1 zumindest mehrere Anfangsventile 7 angedeutet worden.

An dem dem Mischbehälter 1 abgewandten Ende der Stichleitung bzw. der Stichleitungen ist eine Druckluftversorgung 9, beispielsweise ein Kompressor, angeschlossen, der seine Druckluft über ein Luftversorgungsventil 10 in die jeweilige Stichleitung abgeben kann, und zwar in Richtung auf den Mischbehälter 1, also zur Rückführung des in der Stichleitung vorhandenen Mediums, entgegen der normalen Futtereinleitungsrichtung aus dem Mischbehälter 1.

Außerdem ist noch ein Entleerventil 11 zur anderweitigen Entleerung der Stichleitung bzw. der Stichleitungen vorgesehen.

Der Kompressor 9 kann derjenige Kompressor sein, der in einer solchen Anlage gegebenenfalls ohnehin vorgesehen ist, um die Ventile 8 der Abgabenstellen pneumatisch zu öffnen oder zu schließen. Soll nämlich an einer solchen Abgabestelle Futter abgegeben werden, so wird das entsprechende Ventil 8 angesteuert und somit ausgewählt, um mittels Druckluft gesteuert zu werden, so daß in der Stichleitung anstehendes Futter über dieses geöffnete Ventil 8 an der Futterstelle für eine Verfütterung auslaufen kann.

Schließlich ist in der Stichleitung noch ein Trennkörper 14 angedeutet, der zwischen dem jeweiligen Anfangsventil 7 und dem jeweiligen Endventil 13 verschoben werden kann, wobei Sensoren 15 die jeweilige Position des Trennkörpers erkennen oder gegebenenfalls auch dessen Endposition bestimmen, indem sie ihn beispielsweise in ihrem Bereich endgültig stoppen.

Dabei ist noch zu erwähnen, daß das Endventil 13 entweder alleine oder zusammen mit dem Trennkörper 14 einen flüssigkeitsdichten Verschluß an diesem Ende der Stichleitung bildet, so daß Futter oder anderes Medium in die Stichleitung von der Seite des Mischbehälters 1 über die Pumpe 4 und das Hauptventil 5 nur soweit eingeschoben werden kann, bis der Trennkörper im Bereich des Endpunktes beim Endventil 13 anlangt. Andererseits muß es möglich sein, daß durch das Endventil 13 die Druckluft aus dem Kompressor 9 in die Stichleitung für ein Rückschieben des Trennkörpers gelangen kann, wenn das Ventil 10 geöffnet ist.

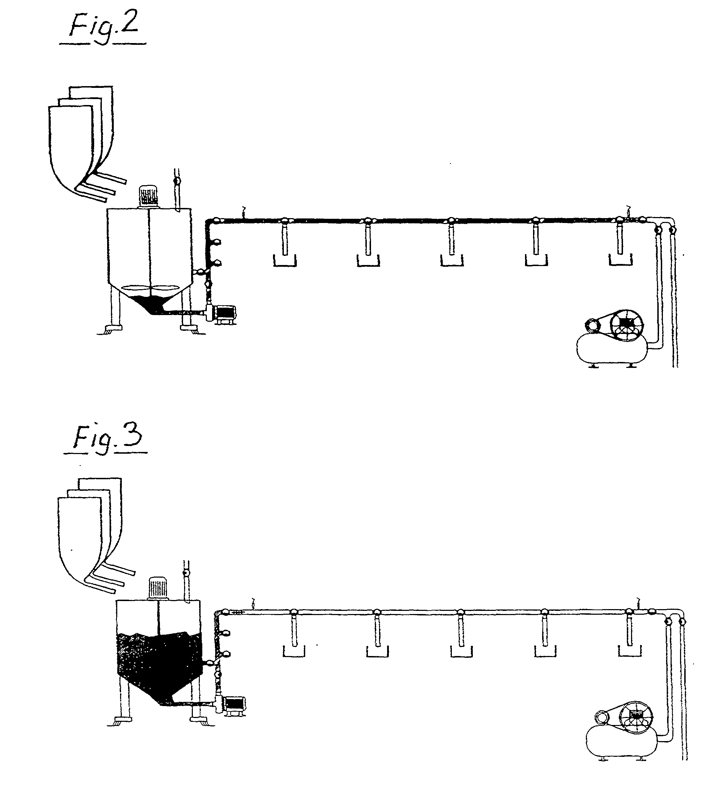

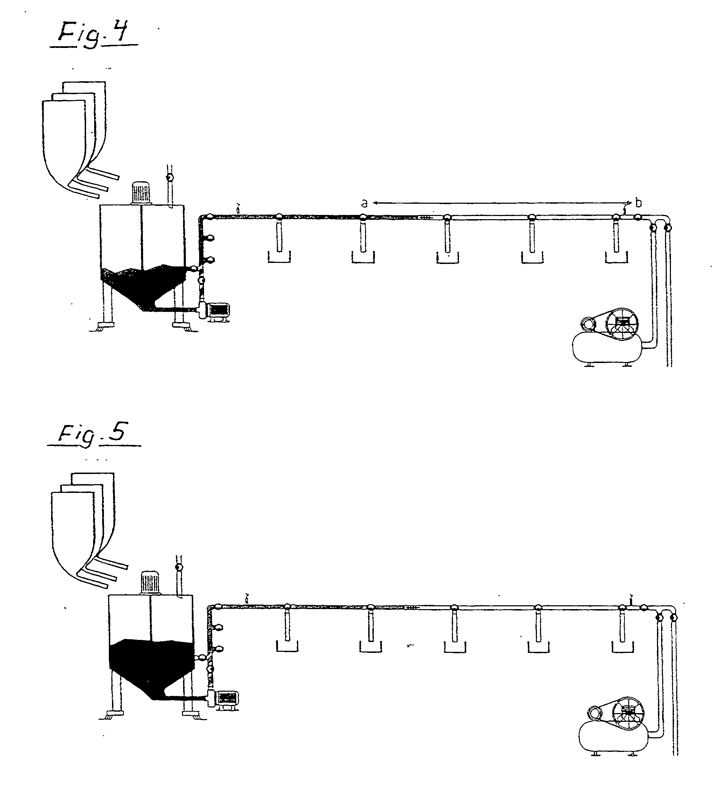

Der Ablauf des erfindungsgemäßen Verfahrens wird anhand der jeweiligen Darstellung der Anlage gemäß Fig. 4 unter Fortlassung der Bezugszahlen in den Fig. 2 bis 8 in einzelnen Phasen näher erläutert.

Zu Beginn bzw. vor einem Füttervorgang kann die gesamte Stichleitung bis zum Endventil 13 mit Wasser oder einer anderen pumpfähigen Komponente gefüllt sein, die als Füllmedium bzw. als Schiebemedium bei dem vorhergehenden Füttervorgang fungiert hat, was im nachfolgenden deutlich gemacht wird. Ein Rest dieser Komponente befindet sich auch noch im Mischbehälter 1. Ziel ist es, an einigen ausgewählten, also vorher festgelegten Futterstellen bzw. Abgabestellen bestimmte Mengen Futter unterschiedlicher Zusammensetzung mit mehreren Füttervorgängen so auszudosieren, daß nach einem Füttervorgang möglichst keinerlei Futterrest verbleibt, sondern, wie im vorhergehenden erwähnt, am Ende des Füttervorganges tatsächlich möglichst nur noch Wasser in der Stichleitung enthalten ist.

Bei Beginn bzw. vor Beginn des Füttervorganges wird der gesamte Inhalt der Stichleitung, nämlich die Füll- bzw. Schiebekomponente mittels Preßluft in den Mischbehälter 1 zurückgedrückt. Wenn der Sensor 15 am Anfang der Stichleitung den Trennkörper 14 erkennt, ist dieser Vorgang abgeschlossen. Der Trennkörper 14 steht nun im Bereich des Anfangsventiles 7 der Stichleitung. Die Stichleitung ist komplett leer.

Es spricht vieles dafür, diesen Zeitpunkt erst als Abschluß des vorhergehenden Füttervorganges anzusehen und erst danach den nächstfolgenden Füttervorgang beginnen zu lassen, da der Zeitraum zwischen zwei derartigen Füttervorgängen relativ lang sein kann und es, insbesondere im Winter, vorteilhaft sein kann, wenn in dieser Zwischenphase zwischen den Füttervorgängen die Stichleitung nicht gefüllt, sondern leer ist. Beispielsweise kann so in relativ offenen und kalten Stallanlagen ein Einfrieren dieser Stichleitung und womöglich ein Platzen der Stichleitung verhindert werden.

Als nächstes ermittelt ein Steuerungscomputer den Rauminhalt der Stichleitung von der letzten Abgabestelle, also dem Ventil 8 der letzten Abgabestelle, aus der bei dem nachfolgenden Füttervorgang noch gefüttert werden soll und das also bei dem Füttervorgang für ein Öffnen ausgewählt werden wird, bis hin zum Ende der Stichleitung, also bis zur Position des Trennkörpers 14 im Bereich des Endventils 13. Dabei ist mit der "letzten" Abgabestelle nicht die zeitlich zuletzt auszuwählende Abgabestelle gemeint, sondern diejenige der Abgabestellen, die bei einem jeweiligen Fütterungsvorgang am weitesten von dem Mischbehälter 1 entfernt ist. Dies muß nicht unbedingt die tatsächlich letzte Abgabestelle sein, weil ja vielleicht bei dem bevorstehenden Füttervorgang diese tatsächlich letzte Abgabestelle gar nicht ausgewählt werden soll, weil beispielsweise in diesem Bereich Tiere sind, die mit dem Füttervorgang nicht gefüttert werden sollen, weil sie momentan gar kein Futter erhalten sollen oder weil sie im Rahmen eines anderen Füttervorganges ein Futter einer anderen Zusammensetzung erhalten sollen.

Ist der Rauminhalt zwischen dem genannten letzten auszuwählenden Ventil 8 und dem Ende der Stichleitung vom Steuerungscomputer bestimmt, wird dieser Rauminhalt nun durch Verwiegen aus dem Mischbehälter heraus mittels der Pumpe 4 mit einem Füllmedium, vorzugsweise Wasser, gefüllt. Das Entleerventil 11 am Ende der Stichleitung ermöglicht dabei eine Entlüftung der Stichleitung. Gefüllt wird mit diesem Füllmedium also die Totraumstrecke, die bei dem nächsten folgenden Füttervorgang zwischen dem letzten auszuwählenden Ventil 8 und dem Ende der Stichleitung in jedem Falle verbleiben wird, so daß ein Einleiten von Futter in diesen Bereich nutzlos wäre und zu unliebsamen Futterresten und zu Verschmutzungen der Leitungen führen würde.

Reicht der Inhalt des Mischbehälters 1 für die Befüllung dieser Totraumstrecke mit Füllmedium nicht aus, wird eine entsprechende Menge über eine Zuführung 3 nachgeholt.

Danach wird das auszudosierende Futter im Mischbehälter 1 zubereitet. Die gewünschten Zutaten gelangen über die Zuführungen 2 und 3 in den Mischbehälter 1. Dabei wird möglichst nur eine solche Futtermenge angemischt und verwogen, die für den nächstfolgenden Füttervorgang gerade ausreicht, so daß sie restlos über eine oder mehrere ausgewählte Abgabestellen verfüttert werden kann. Das Volumen der Stichleitung, das bereits für das Füllmedium berücksichtigt worden ist, muß bei der Futteran-mischung nicht mehr berücksichtigt werden bzw. wird durch das erfindungsgemäße Verfahren quasi mittelbar berücksichtigt.

Das angemischte Futter wird nun mittels der Pumpe 4 in die Stichleitung gefördert, bis der Trennkörper 14 durch den Sensor 15 am Ende der Stichleitung, also im Bereich des Endventils 13, erkannt wird, wobei der Trennkörper von der Front des Füllmediums geschoben wird, dem der Futterstrang unmittelbar nachfolgt. Reicht gegebenenfalls die Futtermenge im Tank nicht aus, wird eine Schiebekomponente, vorzugsweise wiederum Wasser, über die Zuführung 3 nachgeholt, so daß in der Stichleitung nur ein begrenzter Futterstrang vorhanden ist, der bei dem jeweiligen Füttervorgang restlos verfüttert werden kann und der an seinem Ende vom Füllmedium und an seinem anderen Ende von dem Schiebemedium bzw. einer Schiebekomponente begrenzt ist.

In der Stichleitung befinden sich nun also von der auszuwählenden Futterstelle bis zum Ende der Stichleitung das Füllmedium, von der auszuwählenden Futterstelle zum Mischbehälter hin das auszudosierende Futter oder ein begrenzter Strang dieses Futters, welcher vom Strangende bis zum Mischbehälter durch einen entsprechenden Strang eines Schiebemediums ergänzt wird.

Die vorher festgelegten Futtermengen werden nun mit Hilfe des Auswiegens im Mischbehälter aus den Ventilen 8, die für den jeweiligen Füttervorgang ausgewählt und jeweils geöffnet werden, ausdosiert. Auch wenn der Futterstrang hierbei zunächst bis in den Mischbehälter hineinreicht, weil tatsächlich eine entsprechende Futtermenge mit dem Füttervorgang abgegeben werden soll, wird schließlich das Futter bei der Abfütterung des letzten Futterrestes aus dem Mischbehälter 1 mit einem Schiebemedium nachgeschoben und spätestens dann als zu einem sich durch die Abfütterung verkürzenden Futterstrang begrenzt. Dazu wird gegebenenfalls über die Zuführung 3 das entsprechende Schiebemedium nachgeholt.

Es ist zu berücksichtigen, daß die Stichleitung einen relativ kleinen Durchmesser haben kann, so daß auch das Volumen der gesamten Stichleitung relativ klein ist. Dies heißt aber, daß auch bei einer dosierten, restlosen Futterabgabe pro Füttervorgang normalerweise mehr als nur das Volumen der Stichleitung zwischen dem letzten auszuwählenden Futterventil und dem Mischbehälter an Futtermenge abgefüttert werden muß, also zum Beginn des Füttervorganges sicherlich der Futterstrang bis in den Mischbehälter 1 hineinreicht, so daß mit Hilfe der Wiegeeinrichtung 12 tatsächlich die Ausdosierung auch über die Ventile 8 erfolgen kann. Tatsächlich wird also wahrscheinlich erst gegen Ende des Füttervorganges Schiebemedium über die Zuführung 3 nachgeholt und dann noch der letzte Rest als Futterstrang durch die Stichleitung geschoben und restlos abverfüttert.

Am Ende einer solchen restlosen Verfütterung ist somit in der Stichleitung kein Futterrest mehr vorhanden, sondern das Füllmedium und das Schiebemedium stoßen in der Stichleitung unmittelbar aneinander, wobei für beide Medien vorzugsweise Wasser vorgesehen ist, so daß letztendlich also die Stichleitung am Ende eines Füttervorganges mit Wasser gefüllt ist.

Wie bereits im vorhergehenden erwähnt, kann der Füttervorgang mit dem Rückschieben dieses Wassers mit Hilfe der Druckluft aus dem Kompressor 9 beendet werden, also mit einer leeren Stichleitung beendet werden, es kann der Füttervorgang aber auch mit der mit Wasser gefüllten Stichleitung beendet werden, so daß der nächste Füttervorgang mit dem Entleeren der Stichleitung mit Hilfe der Druckluft beginnen würde.

In jedem Falle kann mit einem entsprechenden Phasenablauf ein nächster Füttervorgang erfolgen, wobei eine andere Futtermischung im Mischbehälter 1 angemischt wird und über andere ausgewählte Ventile 8 ausdosiert und abgegeben wird.

Das Schiebemedium bzw. Füllmedium, also vorzugsweise Wasser, kann mit Hilfe der Druckluft in den Mischbehälter 1 zurückgedrückt werden, nämlich über das Ventil 6, weil es normalerweise unproblematisch für eine nächste Futtermischung als Flüssigkomponente verwendet werden kann, so daß eine entsprechende Nachholung einer Flüssigkomponente in entsprechendem Maße über das Ventil 3 entfallen kann. Das Schiebemedium bzw. Füllmedium kann aber auch, was zeichnerisch nicht näher dargestellt ist, in einen Auslagerungsbehälter gedrückt werden, so daß die nächste Futtermischung insoweit frisch angemischt werden kann.

Im Sinne dieser geschilderten Phasen zeigt die Fig. 2 die Stichleitung, die mit Füllmedium und Schiebemedium gefüllt ist am Ende bzw. vor dem Anfang eines Füttervorganges, wobei dieses Medium bis in den Mischbehälter 1 zurückreicht und der Trennkörper 14 in seiner Endstellung im Bereich des Endventiles 13 steht. Die Stichleitung ist in diesem Zustand also vollständig vorzugsweise mit Wasser gefüllt.

Fig. 3 zeigt die Anlage nachdem der Trennkörper 14 bis an das Anfangsventil 7 mittels der Druckluft aus dem Kompressor 9 zurückgedrückt worden ist, wodurch die Stichleitung entleert ist und in diesem Falle das rückgeschobene Medium über das Ventil 6 in den Mischbehälter 1 gelangt ist. Es kann also für das Anmischen des Futters für den nächsten Füttervorgang genutzt werden.

In Fig. 4 und 5 wird zunächst einmal diese vorhandene Komponente erst einmal als Füllmedium mit einem bestimmten Volumen in die Stichleitung eingegeben, und zwar mit einem Volumen, das dem für den nächsten Füttervorgang verbleibenden Endabschnitt a bis b entspricht, welcher bei dem nächsten Füttervorgang verbleiben wird, und zwar zwischen dem letzten auszuwählenden Abgabeventil 8 und dem Endventil 13. An der Front dieses Füllmediums wird der Trennkörper 14 schon einmal entsprechend weit wieder in die Stichleitung hineingeschoben.

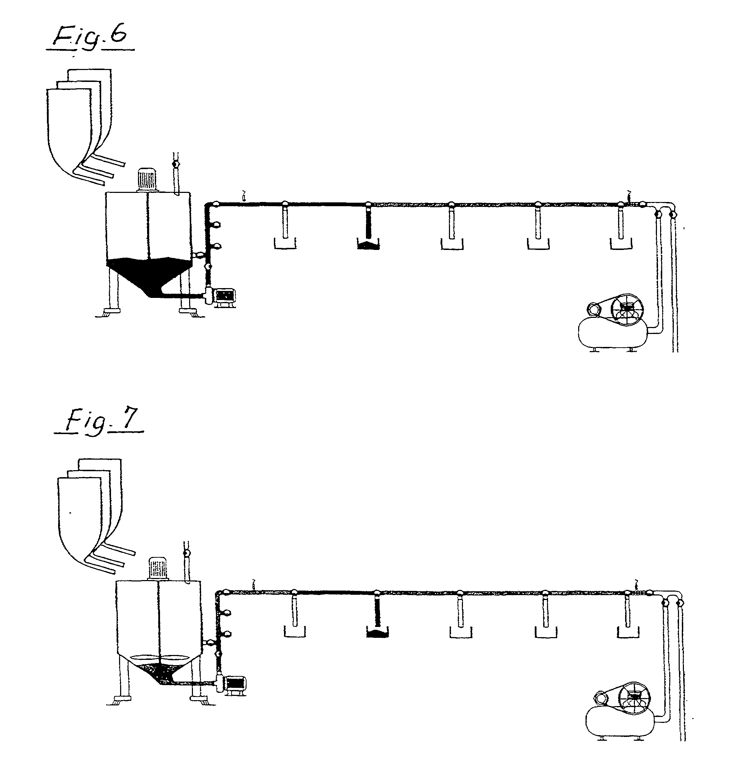

Ist ein entsprechender Volumenstrang des Füllmediums in der Stichleitung vorhanden, so wird mit dem entsprechend angemischten Futter gemäß Fig. 6 nachgedrückt.

Fig. 6 zeigt bereits die Phase, in der das Füllmedium in den vorher bestimmten Endabschnitt a bis b gelangt ist und über das entsprechend letzte auszuwählende Ventil 8 bereits eine Futterabgabe erfolgt, wobei der Futterstrang bis zu diesem Ventil 8 ansteht, so daß das Futter in die Futterstelle bei geöffnetem Ventil 8 abläuft, während das Restvolumen der Stichleitung durch das Füllmedium gefüllt und somit für das Futter blockiert ist.

Wie die Fig. 6 andeutet, erfolgt das Ausdosieren mit Hilfe der Wiegeeinrichtung 12 des Mischbehälters 1, weil ein Großteil des abzufütternden Futters noch im Mischbehälter 1 vorhanden ist.

Fig. 7 zeigt die Endphase des Abfütterungsvorganges. Der letzte Rest von Futter wird über das Ventil 8, welches für diesen Füttervorgang ausgewählt und geöffnet worden ist, abgefüttert, wobei der sich durch den Abfütterungsvorgang verkürzende Futterstrang mit einem Schiebemedium aus dem Mischbehälter 1 begrenzt und weiter in Richtung auf das Ventil 8 geschoben wird.

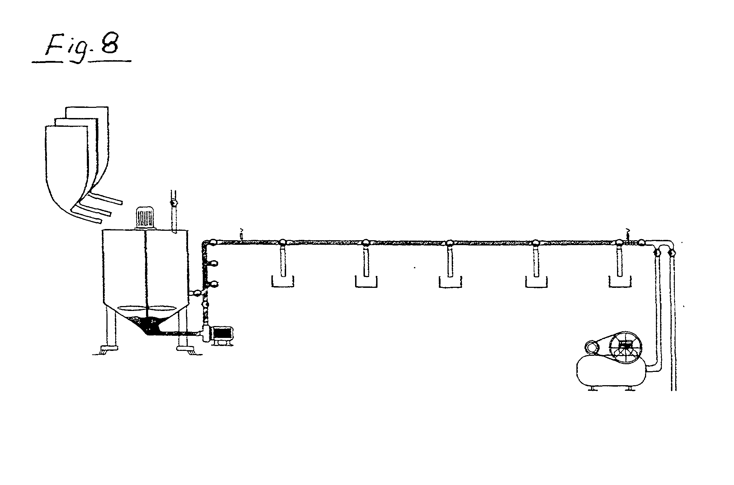

In Fig. 8 ist schließlich dann nach restloser Abfütterung der Zustand erreicht, bei dem die gesamte Stichleitung mit Füllmedium und Schiebemedium gefüllt ist, die unmittelbar aneinandergrenzen, wobei beides vorzugsweise Wasser ist.

Ergänzend erwähnt sei noch im Zusammenhang mit den Fig. 6 und 7, daß innerhalb eines Füttervorganges natürlich auch nacheinander mehrere Ventile 8 ausgewählt und geöffnet werden können. Es würde dann die Abfütterung an dem ersten auszuwählenden Ventil begonnen, also an dem auszuwählenden Ventil, das an dem Mischbehälter 1 am nächsten liegt. Als nächstes Ventil wird das nächste ausgewählte Ventil in Richtung des Endpunktes betätigt.

## Patentansprüche

1. Verfahren zur Abgabe von Futter über wenigstens eine Abgabestelle wenigstens einer mit mehreren derartigen Abgabestellen ausgerüsteten Stichleitung, die hinter ihrer letzten Abgabestelle unter Ausbildung eines definierten Endpunktes für eine Flüssigkeitsleitung sperrbar ist, wobei Futter am Anfang der Stichleitung eingeleitet wird und durch Öffnen einer ausgewählten Abgabestelle abgegeben wird, wonach die Stichleitung von dem Endpunkt aus mittels eines gasförmigen Rückschiebemediums, vorzugsweise mittels Druckluft, wieder entleert wird,
**dadurch gekennzeichnet,**
**daß** für einen Futtervorgang vor der Einleitung des Futters am Anfang der Stichleitung zunächst ein Füllmedium in die Stichleitung eingeleitet wird, und zwar in einer solchen Menge, daß es unter Füllung des jeweiligen Endabschnittes der Stichleitung vom Endpunkt bis zu der letzten Abgabestelle der Stichleitung zurückreichen wird, durch die als (eine) ausgewählte Abgabestelle Futter abgegeben werden soll, wenn der aus Futter gebildete Futterstrang an dieser Abgabestelle zur Abfütterung ansteht.

2. Verfahren nach Anspruch 1, **dadurch gekennzeichnet, daß** nur soviel Futter in die Stichleitung eingegeben wird, wie in einem Futtervorgang abgegeben werden soll.

3. Verfahren nach Anspruch 2, **dadurch gekennzeichnet, daß** das Futter einleitungsseitig mit einem Schiebemedium nachgedrückt wird.

4. Verfahren nach einem oder mehreren der vorhergehenden Ansprüche, **dadurch gekennzeichnet, daß** als Füllmedium und/oder als Schiebemedium eine ernährungsphysiologisch unbedenkliche Flüssigkeit verwendet wird.

5. Verfahren nach einem oder mehreren der vorhergehenden Ansprüche, **dadurch gekennzeichnet, daß** zur Futterabgabe über mehrere Abgabestellen der Stichleitung bei einem Futtervorgang das Futter bis zur letzten für die Futterabgabe ausgewählten Abgabestelle geleitet wird und nach der dortigen Futterabgabe das Restfutter mittels des Rückschiebemediums zur vorletzten ausgewählten Abgabestelle zurückgeschoben wird und später bis hin zur einleitungsseitig ersten ausgewählten Abgabestelle, aus der noch Futter abgegeben werden soll.

6. Verfahren nach einem oder mehreren der vorhergehenden Ansprüche, **dadurch gekennzeichnet, daß** an der Front des Füllmediums ein Trennkörper bewegt wird, der als Flüssigkeitsleitungsverschluß am Endpunkt gestoppt wird.

## Claims

1. Process for discharging feed via at least one discharge location of at least one branch line which is equipped with a plurality of such discharge locations and can be blocked downstream of its final discharge location, with a defined end point for a liquid-channelling line being formed in the process, it being the case that feed is introduced at the start of the branch line and is discharged by virtue of a selected discharge location being opened, whereupon the branch line is emptied again from the end point by means of a gaseous return medium, preferably by means of compressed air, **characterized in that** for a feeding operation, before the feed is introduced, first of all a filling medium is introduced into the branch line at the start of the latter, to be precise in such a quantity that, filling the respective end section of the branch line, it will extend back from the end point to the final discharge location of the branch line through which, as (a) selected discharge location, feed is to be discharged when the line of feed is present at this discharge location for feeding purposes.

2. Process according to Claim 1, **characterized in that** only as much feed as is to be discharged in one feeding operation is introduced into the branch line.

3. Process according to Claim 2, **characterized in that** the feed is pushed up on the introduction side by a pushing medium.

4. Process according to one or more of the preceding claims, **characterized in that** the filling medium and/or pushing medium used is a nutritionally safe liquid.

5. Process according to one or more of the preceding claims, **characterized in that**, for the purpose of discharging feed via a plurality of discharge locations of the branch line during a feeding operation, the feed is directed to the last discharge location selected for discharging the feed and, once the feed has been discharged there, the remaining feed is pushed back, by means of the return medium, to the last-but-one selected discharge location and, subsequently, as far as the first selected discharge location on the introduction side from which feed is still to be discharged.

6. Process according to one or more of the preceding claims, **characterized in that** a separating body is moved at the front of the filling medium and is stopped at the end point as a closure for the liquid-channelling line.

## Revendications

1. Procédé pour distribuer de la nourriture pour animaux par au moins un emplacement de distribution d'au moins une conduite de dérivation équipée de plusieurs emplacements de distribution de ce type, laquelle peut être fermée, pour une conduite de liquide, derrière son dernier emplacement de distribution, en formant un point terminal défini, la nourriture étant introduite au début de la conduite de dérivation et étant distribuée, par ouverture d'un emplacement de distribution sélectionné, après quoi la conduite de dérivation est à nouveau vidangée à partir du point terminal, au moyen d'un fluide gazeux de refoulement, par exemple au moyen d'air comprimé,
**caractérisé**
**en ce que** pour une opération d'alimentation, on introduit d'abord dans la conduite de dérivation un fluide de remplissage, avant d'introduire la nourriture au début de la conduite de dérivation, et ce dans une quantité telle que, en remplissant le tronçon terminal respectif de la conduite de dérivation, ce fluide s'étend depuis le point terminal jusqu'au dernier emplacement de distribution de la conduite de dérivation, par lequel en tant que (un) emplacement de distribution sélectionné, de la nourriture doit être distribuée lorsque le cordon de nourriture, formé par la nourriture, se trouve en cet emplacement de distribution pour donner à manger aux animaux.

2. Procédé selon la revendication 1, **caractérisé en ce qu'**on n'introduit dans la conduite de dérivation que la quantité de nourriture qui doit être distribuée au cours dune opération d'alimentation.

3. Procédé selon la revendication 2, **caractérisé en ce que** la nourriture est refoulée côté introduction au moyen d'un fluide de poussée.

4. Procédé selon une ou plusieurs des revendications précédentes, **caractérisé en ce qu'**on utilise comme fluide de remplissage et/ou comme fluide de poussée, un liquide qui ne présente aucun risque sur le plan de la physiologie de la nutrition.

5. Procédé selon une ou plusieurs des revendications précédentes, **caractérisé en ce que** pour la distribution de nourriture par plusieurs emplacements de distribution de la conduite de dérivation, pendant une opération d'alimentation, la nourriture est acheminée jusqu'au dernier emplacement de distribution sélectionné pour la distribution de nourriture, et après la distribution de nourriture à cet endroit, la nourriture restante est refoulée au moyen du fluide de refoulement jusqu'à l'avant-dernier emplacement de distribution sélectionné, et plus tard jusqu'au premier emplacement de distribution sélectionné, côté introduction, duquel de la nourriture doit encore être distribuée.

6. Procédé selon une ou plusieurs des revendications précédentes, **caractérisé en ce que** sur le front du fluide de remplissage est déplacé un corps de séparation qui, en tant que fermeture de la conduite de liquide, est stoppé au point terminal.
